# EUROPÄISCHE PATENTSCHRIFT

(11) **EP 1 060 980 B1**
(45) Veröffentlichungstag und Bekanntmachung des Hinweises auf die Patenterteilung: **17.03.2004**
(21) Anmeldenummer: 00111340.6
(22) Anmeldetag: 26.05.2000
(51) Int. Cl.: B62M 11/16, B62M 11/18, B62M 11/14

(54) **Schalteinrichtung für eine Mehrgangnabe für ein Fahrrad**
Multi-speed hub transmission for a bicycle
Transmission de bicyclette à plusieurs vitesses

(30) Priorität: 17.06.1999 DE 19927699; 22.03.2000 DE 10014265
(43) Veröffentlichungstag der Anmeldung: 20.12.2000
(73) Patentinhaber: SRAM Deutschland GmbH, 97404 Schweinfurt (DE)
(72) Erfinder: Steuer, Werner, 97424 Schweinfurt (DE); Kohaupt, Michael, 97424 Schweinfurt (DE)

(56) Entgegenhaltungen:
- EP-A- 0 383 350
- EP-A- 0 803 430
- DE-A- 4 229 023
- US-A- 5 322 487

## Beschreibung

Die Erfindung betrifft eine Schalteinrichtung für eine Mehrgangnabe gemäß dem Oberbegriff des Anspruchs 1.

Aus EP ― 0 803-430 ist eine Mehrgangnabe für Fahrräder bekanntgeworden, in der eine Kupplung mit Klauenkupplungselementen aus Schalthülse (32) und Schaltbuchse (31) gebildet wird, die zum Zweck der Auswahl eines Pfades für das Drehmoment axial relativ zueinander bewegt werden, wobei die Klauenkupplungselemente in Eingriff gelangen bzw. außer Eingriff gebracht werden. Um die unter der Wirkung des Drehmomentes stehenden Klauenkupplungsetemente auszukoppeln, werden sie unter Ausnutzung der Relativdrehung zwischen Komponenten des Getriebes axial zueinander verschoben.

Die Schalthülse (32) weist dazu an ihrem Umfang Lücken und Vorsprünge mit Steigflächen (32c) auf zum Zusammenspiel mit einem Schaltklotz (100). Dieser Schaltklotz greift infolge seiner axialen Verschiebung bei einer Schaltoperation in die Lücken ein oder bewirkt ein Abgleiten zwischen den Steigflächen an der Schalthülse und dem Schaltklotz.

Mit der Abgleitbewegung ist eine axiale Verschiebung der Schalthülse verbunden, die zum Aus- und Einkoppeln der o.g. Klauenkupplungselemente der Schalthülse 32 an korrespondierenden Klauenkupplungselementen führt.

Mit dem deutschen Patent DE 42 29 023 ist eine Mehrgangnabe bekannt geworden, die eine Schalteinrichtung zwischen zwei Gesperre-Ebenen in einer Mehrgangnabe aufweist, die auch unter Last hin- und herschaltbar ist. Erreicht wird dies durch zwangsweise im Mitnahmeeingriff gehaltene, übereinander angeordnete Vortriebsklinken, deren Neigung des Zahneingriffes derart gewählt ist, dass sich die Vortriebsklinken unter Last außer Eingriff schieben würden. Eine Steuerscheibe läßt sich unter den Vortriebsklinken verschieben, wodurch diese abwechselnd in ihrer zugeordneten Sperrverzahnung festgehalten und verriegelt werden. Die Steuerscheibe wird mittels einer Mitnehmerscheibe im Klinkenträger mit Antriebsdrehzahl mitgenommen und hat gegenüber den Vortriebsklinken einen nach rückwärts gerichteten Totgang-Drehweg, der erforderlich ist, um beim Bremsen die ersten Winkelgrade beim Rückwärtstreten zur Aussteuerung der zwangsweise festgehaltenen Vortriebsklinken zu verwenden. Ein Schaltmechanismus in der beschriebenen Form hat den Vorteil, durch die Aufteilung der Kraftübertragung in eine Antriebskomponente und eine nach innen gerichtete Steuerkomponente auch im Lastfalle nur die kleinere Steuerkomponente beherrschen zu müssen.

Der Gegenstand der vorgeschlagenen Erfindung betrifft demgegenüber eine stark vereinfachte und kostengünstige Schalteinheit, die ebenfalls Klinken einer klinkengesteuerten Mehrgangnabe unter Last aussteuern und in diesem ausgesteuerten Zustand halten kann. In dem dargestellten Ausführungsbeispiel handelt es sich um eine Schalthülse, die um eine Nabenachse angeordnet ist, und eine mit dieser drehbar verbundenen Schaltbuchse, die Schaltvorsprünge an ihren jeweiligen Stirnflächen aufweisen, die voneinander durch Lücken getrennt sind, welche breit genug sind, um sich unter die jeweils auszuhebende Klinke zu schieben, wobei die Klinke auf beiden Seiten von Vorsprüngen eingeschlossen wird. Da die Schalthülse bzw. die Schaltbuchse jeweils eine unterschiedliche und insbesondere langsamere Drehzahl als die Klinken aufweisen, wird sich, nachdem sich ein Vorsprung vor die Klinke geschoben hat, dieser durch den Vortrieb des Antriebsdrehmomentes durch den Fahrer unter die Klinke schieben und diese ausheben. Für den vorbeschriebenen Schaltvorgang ist keine besonders hohe Steuerkraft erforderlich, wobei aber zu berücksichtigen ist, dass die Annäherung der Profile an die jeweiligen Klinken nicht immer wunschgemäß verläuft: Wird nämlich ein Vorsprung mit einer Klinke zusammentreffen, so kann diese von dem Vorsprung bei hohem anliegenden Drehmoment nicht ausgehoben werden. Erst wenn sich die Klinke zwischen zwei Vorsprüngen befindet, kann sich der Vorsprung unter die Klinke schieben und diese aus ihrem Drehmomentverband lösen. Der Vorsprung kann die Klinke aber bereits ausheben, wenn kein nennenswertes Drehmoment von dieser Klinke übertragen wird. Diesen Schaltvorteil, der auch bei Stillstand des Getriebes zum Durchschalten der Gangstufen vorhanden ist, bewirken zusätzliche Schrägen an der Klinke. Es wird ferner vorgeschlagen, die Druchschaltfähigkeit dadurch zu erhöhen, dass zusätzlich zu den Schrägen an den Klinken kegelförmige Abschrägungen an den Stirnflächen der Vorsprünge und/oder der Lücken zwischen den Vorsprüngen angeordnet werden, deren Ausrichtung mit den Schrägen an den Klinken in etwa zusammefällt. Schließlich weisen die Vorsprünge des Profils an der Schaltbuchse und an der Schalthülse in Umfangsrichtung angeordnete Schrägen auf, die als Lastbegrenzung wirken können, dadurch, dass die Schaltbuchse oder die Schalthülse von den Klinken abgewiesen wird, wenn große Momente über die Klinken laufen. Es ist von Vorteil, die Schaltbuchse und/oder die Schalthülse mit einer vom Fahrer bedienbaren Fernbedienung über Speicherfedern zu verbinden, die einen Gangstufenwechsel erst bei Erreichen eines bestimmten Aushebedrehmomentes erlauben und den Schaltvorgang verzögern. Durch die Auslegung dieser Speicherfedern ist die Festlegung des angestrebten Aushebedrehmomentes möglich, wodurch allzu heftige Schaltstöße vermieden werden. Die Schalthülse oder die Schaltbuchse werden also eine andere Stelle zum Eingriff unter die Klinke finden, die dann ausgehoben wird, wenn das Moment nachgelassen hat.

Bei einer Dreigangnabe ist eine erste Klinke am Hohlrad gelagert und greift in eine Verzahnung der Nabenhülse ein. Da das Hohlrad bei angetriebenem Planetenradträger zwangsläufig schneller umläuft als dieser, ist es erforderlich, die Schaltbuchse mit einem Kupplungsring zu koppeln, der mit der Drehzahl des Planetenradträgers umläuft. Andererseits muß die Schaltbuchse axial verschiebbar sein, was nur über ein Schaltteil, insbesondere über einen Schubklotz, der mit einer Fernbedienung in Verbindung steht, durchführbar ist. Die beiden vorbeschriebenen Bewegungen können der Schaltbuchse mitgeteilt werden einmal durch die drehbare Lagerung der Schaltbuchse auf der Schalthülse, die drehfest mit dem Schubklotz verbunden ist und zweitens durch die Lagerung der Schaltbuchse in einem Schlitz des Kupplungsringes, der im Falle eines eingeschalteten Schnellganges langsamer umläuft als die mit der Nabenhülse in Wirkverbindung stehende Klinke.

Wird die Verbindung des Antreibers mit dem Planetenradträger ebenfalls durch eine Klinke hergestellt, so gilt das Vorgesagte in sofern, als der langsamer drehende Planetenradträger mit seiner Klinke die mit der Nabenachse drehfest aber axial verschiebbare Schalthülse mit ihrem Profil überholt und die gleichen Aushebbedingungen für die Klinke entstehen läßt, wie die vorbeschriebenen bei der Schalthülse. Zur Sicherung der Funktion beim Rückwärtstreten wird vorgeschlagen, an den Klinken im Bereich des Fusses eine Kontur anzuordnen, die die Form einer Rundung oder Phase hat und gewährleistet, dass die Klinken für den Fall, dass sie noch nicht ausgehoben sind aber noch im Bereich zwischen den Vorsprüngen liegen, ausgehoben werden und sich nicht verklemmen. Da beim Rückwärtstreten keine Last auf den Klinken liegt, wird lediglich auf eine ausreichend grosse Rundung Wert gelegt.

Es ist schließlich von Vorteil, die Position der Schaltbuchse auf der Schalthülse axial nicht starr, sondern mittels einer Speicherfeder zu halten, da dort, wie beschrieben, kurzzeitige Schalthemmungen ausgeglichen werden müssen, wenn verlangt wird, dass die Fernbedienung ohne Widerstände betätigbar sein soll.

Es ergibt sich somit die Aufgabe für die Erfindung, eine Schalteinrichtung für eine Mehrgangnabe zu schaffen, die den Gangwechsel im Stillstand und auch unter Last ohne wesentliche Erhöhung der Steuerkräfte an einer Fernbedienung durchführen kann.

Die Lösung der Aufgabe ist im Kennzeichen des Hauptanspruches beschrieben. Ausgestaltungen sind den Unteransprüchen zu entnehmen.

Anhand eines Ausführungsbeispieles wird die Steuereinrichtung für eine lastschaltbare Mehrgangnabe beschrieben. Es zeigen:
- Fig. 1: einen Teilschnitt einer Mehrgangnabe mit einer Schalteinheit, bestehend aus einer Schaltbuchse und einer Schalthülse mit Profilen an ihrer Stirnseite zum Ausheben von Klinken;
- Fig. 2: die Schaltbuchse mit Schaltvorsprüngen und Lücken als Ausgestaltung für das Profil;
- Fig. 3: die Schaltbuchse mit einem Durchbruch für einen Schubklotz und dem Profil zum Ausheben der Klinke;
- Fig. 4: die durch eine Feder vorspannbare Klinke auf einem Bolzen in einem Kupplungsring gelagert;
- Fig. 5: die Klinke mit einem Fuß und einer Schräge daran;
- Fig. 6: eine zweigeteilte Schalthülse mit einer Friktionskupplung zur Lastbegrenzung beim Einrücken des Profils unter die Klinke.
- Fig. 7.: eine Schalteinheit, bestehend aus der Schaltbuchse gemäß Fig. 2 und einer abgewandelten Schalthülse gemäß Fig. 3 mit einer Speicherfeder.

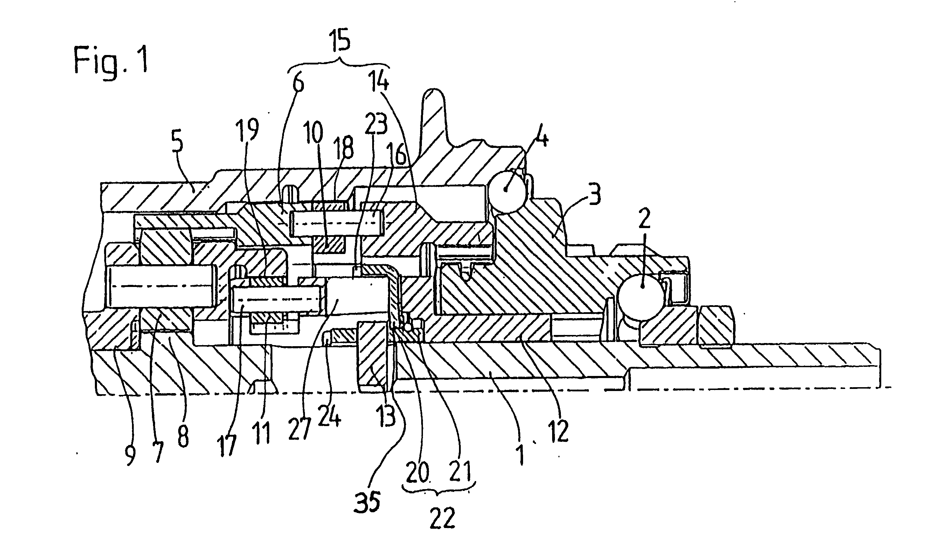

Wird mit 1 eine Nabenachse einer Mehrgangnabe beschrieben, so ist auf dieser über ein erstes Lager 2 ein Antreiber 3 drehbar gelagert. Ein zweites Lager 4 verbindet eine Nabenhülse 5 drehbar mit dem Antreiber 3 und der Nabenachse 1. Innerhalb der Nabenhülse 5 ist ein Planetengetriebe, bestehend aus einem Hohlrad 6, Planetenrädern 7, die in einem Planetenradträger 9 gelagert sind und einem feststehenden Sonnenrad 8 auf der Nabenachse 1 angeordnet. Bei der Mehrgangnabe handelt es sich um eine klinkengesteuerte Dreigangnabe, die gemäß Fig. 1 mit eingeschaltetem Schnellgang dargestellt ist. Auf einem ersten Bolzen 16 ist eine erste Klinke 10 zwischen einem Antriebsring 14 und dem Hohlrad 6 federnd gelagert und greift mit einer Treibkante 33 in eine erste Verzahnung 18 der Nabenhülse 5 ein. Eine aus dem Hohlrad und dem Antriebsring gebildete Hohlradeinheit 15 ist über einen Klinkenfreilauf mit dem Antreiber 3 verbunden. Ebenfalls mit dem Antreiber drehfest verbunden ist ein Kupplungsring 12 mit einem Schlitz 27 und einem zweiten Bolzen 17, auf welchem eine zweite Klinke 11 federnd gelagert ist und mit ihrer Treibkante 33 in eine zweite Verzahnung 19 am Planetenradträger 9 eingreift. Mit dem Kupplungsring 12 ist eine Schaltbuchse 20 durch einen Steg 28 in dem Schlitz 27 drehfest aber axial verschiebbar verbunden, wodurch ein Profil mit Schaltvorsprüngen 23 und Lücken 30 gegen einen Fuß 34 der ersten Klinke 10 geschoben werden kann.

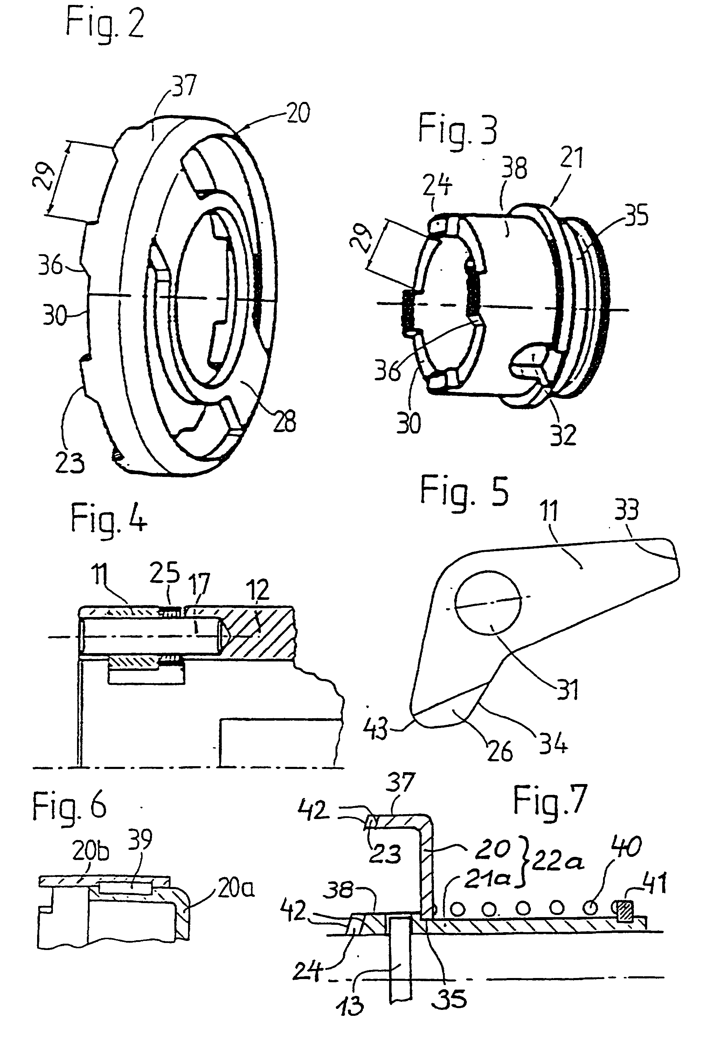

Gemäß Fig. 2 ist ersichtlich, dass das Profil mit den Vorsprüngen 23 und den Lücken 30 auch Anschrägungen 36 aufweist, die zumindest an einer Seite die Schaltvorsprünge 23 mit den Lücken 30 verbinden. Die Schaltbuchse 20 ist auf einer Schalthülse 21 drehbar aber axial festgelegt verbunden und bildet mit dieser eine Schalteinheit 22. Die Schalthülse 21 weist gemäß Fig. 3 einen Durchbruch 23 auf, in welchen ein Schubklotz 13 eingreift, welcher mit einer Fernbedienung in Verbindung steht und durch eine hier nicht dargestellte Schalteinrichtung axial in einem Schlitz der Nabenachse 1 verschoben werden kann. Die Schalthülse 21 weist an ihrer zur zweiten Klinke 11 hin gerichteten Stirnfläche ebenfalls ein Profil mit Vorsprüngen 24 und Lücken 30 auf, das gegen einen Fuß 34 mit der Schräge 26 der zweiten Klinke 11 geschoben werden kann. Der Fuß 34 der Klinken 10 und 11 weist eine Kontur 43 auf, die gross genug ist, um ein Festklemmen der Klinken 10 und 11 beim Rückwärtstreten zu verhindern, wenn die Klinken 10 und 11 sich gerade zwischen den Vorsprüngen 23 und 24 befinden. Die Klinken 10 und 11 werden am jeweiligen Vorsprung abgewiesen und ausgehoben; ein Drehmoment liegt ja nicht an.

Gemäß den Fig. 4 und 5 wird die Position der zweiten Klinke 11 auf dem Bolzen 17 im Kupplungsring 12 dargestellt. Eine Feder 25 ist um den Bolzen 17 herum angeordnet und bewegt die zweite Klinke 11 mit ihrer Treibkante 33 gegen die Verzahnung 19 im Planetentradträger 9. Die Klinken 10 und 11 weisen eine Bohrung 31 auf, mit denen sie auf ihren Bolzen 16 und 17 schwenkbar gelagert sind.

Gemäß Fig. 6 wird eine zweiteilige Schaltbuchse mit zwischengeschalteter Überlastkupplung als mögliche Variante gezeigt, wobei die zweiteilige Schaltbuchse aus einem Ring 20b und einer Buchse 20a besteht, die durch eine Friktionskupplung 39 miteinander verbunden sind. Die Friktionskupplung 39 kann den Schaltvorgang unter Spitzenlast verhindern bzw. verzögern und in Bereiche von einem Drehmomentanfall geringeren Ausmaßes verlegen. Geringere Drehmomente werden immer dann auftreten, wenn beim Pedalieren des Fahrrades der Bereich des kleinsten Drehmomentes mit senkrecht stehenden Kurbelarmen für die Pedale erreicht wird.

Gemäß Fig. 7 wird eine Schalteinheit 22a erläutert, die gegenüber der vorbeschriebenen Schalteinheit 22 aus der Schaltbuchse 20 und einer Schalthülse 21a besteht, die miteinander drehbar und zusätzlich axial verschiebbar verbunden sind. Die axiale Position der Schaltbuchse 20 auf der Schalthülse 21a wird durch eine Speicherfeder 40 sichergestellt, die zwischen der Schaltbuchse 20 und einem Haltering 41 angeordnet ist und die Schaltbuchse 20 gegen einen Anschlag auf der Schalthülse 21 a schiebt. Im Falle einer Verschiebung der Schaltbuchse 20 gegen die erste Klinke 10 wird die Schaltbuchse 20 auf der Schalthülse 21 a bei gleichzeitigem Spannen der Speicherfeder 40 so lange verschoben, bis die Schalthemmnisse beseitigt sind und die Schaltvorsprünge 23 die erste Klinke 10 umschließen können. Die Profile können schließlich an den jeweiligen Stirnflächen der Schaltvorsprünge 23,24 und/oder der Lücke 30 Abschrägungen 42 aufweisen, die in ihrer Richtung mit den Schrägen 26 an den Klinken 11 zusammenfallen und wegen ihrem kreisförmigen Verlauf kegelförmig augebildet sind.

Zur Erklärung der Funktion der Dreigangnabe werden die Wege des Kraftflusses beschrieben:

In der gemäß Fig. 1 dargestellten Stellung der Schalteinheit 22 sind beide Klinken 10 und 11 mit ihren Verzahnungen 18 und 19 im Einsatz, wodurch der Kraftfluß des Schnellganges wie folgt verläuft: Antreiber 3, Kupplungsring 12, zweite Klinke 11, Planetenradträger 9, Planetenrad 7, Hohlrad 6, Klinke 10, Verzahnung 18 in der Nabenhülse 5.

Im Normalgang wird der Schubklotz 13 mit der Schalteinheit 22 in die Mitte des Schlitzes in der Nabenachse 1 verschoben, wodurch sich die Vorsprünge 23 der Schaltbuchse 20 unter die erste Klinke 10 schieben und diese aus ihrer zugehörigen Verzahnung 18 der Nabenhülse 5 ausheben. Die Schaltbuchse 20 legt sich mit einer äußeren Zylinderfläche 37 unter die erste Klinke 10, wodurch diese permanent ausgehoben bleibt. In diesem Fall wird der Kraftfluß vom Antreiber 3 über den Kupplungsring 12, die zweite Klinke 11, den Planetenradträger 9 über eine hier nicht dargestellte und immer im Eingriff befindliche dritte Klinke, die mit dem Planetenradträger 9 verbunden ist, in die Nabenhülse 5 verlaufen. Das Hohlrad 6 dreht aufgrund seiner Übersetzung schneller mit, wird aber wegen der ausgehobenen ersten Klinke 10 in Bezug auf die Drehung der Nabenhülse 5 unwirksam.

Zur Erzielung des Bergganges wird vom Schubklotz 13 die Schalthülse 21,21 a mit ihren Vorsprüngen 24 unter die zweite Klinke 11 geschoben, wodurch diese auf eine äußere Zylinderfläche 38 der Schalthülse 20 aufläuft und ebenfalls aus ihrer zugeordneten Verzahnung 19 im Planetenradträger 9 ausgehoben bleibt. Beide Klinken 10 und 1 1 sind somit unwirksam und der Kraftfluß verläuft von dem Antreiber 3 über eine immer im Eingriff befindliche vierte Klinke zwischen dem Antreiber 3 und dem Antriebsring 14 über den ersten Boizen 16 in das Hohlrad 6 und treibt über das Planetenrad 7 den Plantenradträger 9 ins Langsame an, auf dem die ebenfalls immer im Eingriff befindliche vorbeschriebenen dritte Klinke vom Planetenradträger 9 zu Nabenhülse 5 wirksam werden kann.

Die Lastschaltbarkeit der Dreigangnabe liegt in erster Linie in dem Profil auf den Stirnflächen der Schaltbuchse 20 und des Schalthülse 21,21a begründet. Am Beispiel der ersten Klinke 10 wird die Technik zu deren Aushebung aus der Verzahnung 18 unter Last wie folgt beschrieben:

Die Schaltvorsprünge 23 sind untereinander durch Lücken 30 mit einer Breite 29 verbunden, wobei diese Breite 29 von einer Größe ist, die ausreicht, beim Verschieben der Schaltbuchse 20 jeweils einen Schaltvorsprung 23 vor und einen Schaltvorsprung 23 hinter die erste Klinke 10 zu plazieren. Da die erste Klinke 10 mit unterschiedlicher Drehzahl zu den Schaltvorsprüngen 23 läuft, müssen diese einen ausreichend großen Abstand voneinander haben, um die vorbeschriebene Schaltposition des Profils mit den Schaltvorsprüngen 23 zu erreichen. Da die erste Klinke 10 eine höhere Drehzahl hat, als die Schaltvorsprünge 23, läuft im Einrückungsfalle der Fuß 34 auf einen der Schaltvorsprünge 23 auf und löst den Eingriff der Treibkante 33 mit der ersten Verzahnung 18 auf. Eine Steuerkraft wird für das Ausheben der ersten Klinke 10 aus der ersten Verzahnung 18 nicht benötigt, da die Aushebekräfte ausschließlich aus den Vortriebskräften durch das Pedalieren entnommen werden.

Sollte unter Einwirkung von geringeren Drehmomenten, speziell bei Stillstand des Getriebes, geschaltet werden können, so ist für diesen Fall an den Klinken 10 und 11 jeweils eine Schräge 26 angeordnet, die mit den vorbeschriebenen Schaltvorsprüngen 23,24 und den Lücken 30 zusammenwirken können. Für diesen Fall ist ein gewisses Maß von Steuerkraft erforderlich, so dass für diesen Fall entweder die Aushebung der Klinken 10 oder 11 erfolgt oder aber eine Speicherung der Bewegung in einer Speichenfeder der Steuereinrichtung bis zur passenden Eingriffsstellung des jeweiligen Profils der Schalthülse 21 bzw. der Schaltbuchse 20 unter die Klinken 10 oder 11 erfolgt. Die Schrägen 36 zwischen den Schaltvorsprüngen 23,24 und den Lücken 30 begrenzen, wie bereits ausgeführt, das Spitzenmoment zum Ausheben der Klinke 10, 11.

### Bezugszeichenliste

- 1.: Nabenachse
- 2.: erstes Lager
- 3.: Antreiber
- 4.: zweites Lager
- 5.: Nabenhülse
- 6.: Hohlrad
- 7.: Planetenrad
- 8.: Sonnenrad
- 9.: Planetenradträger
- 10.: erste Klinke
- 11.: zweite Klinke
- 12.: Kupplungsring
- 13.: Schubklotz
- 14.: Antriebsring
- 15.: Hohlradeinheit
- 16.: erster Bolzen
- 17.: zweiter Bolzen
- 18.: erste Verzahnung
- 19.: zweite Verzahnung
- 20.: Schaltbuchse
- 20a.: Buchse
- 20b.: Ring
- 21.: Schalthülse
- 21a: "
- 22.: Schalteinheit
- 22a: "
- 23.: Schaltvorsprung
- 24.: Schaltvorsprung
- 25.: Feder
- 26.: Schräge
- 27.: Schlitz
- 28.: Steg
- 29.: Breite
- 30.: Lücke
- 31.: Bohrung
- 32.: Durchbruch
- 33: Treibkante
- 34.: Fuß
- 35.: Lagerstelle
- 36.: Anschrägung
- 37.: Zylinderfläche
- 38.: Zylinderfläche
- 39.: Friktionskupplung
- 40: Speicherfeder
- 41.: Haltering
- 42.: Abschrägung
- 43.: Kontur

## Patentansprüche

1. Schalteinrichtung für eine Mehrgangnabe für ein Fahrrad, umfassend
- eine Nabenachse (1);
- einen Antreiber (3);
- eine Nabenhülse (5);
- ein Getriebe, insbesondere mindestens ein Planetengetriebe, jedes umfassend die klassischen Elemente, nämlich mindestens ein Hohlrad (6), mindestens einen Planetenradträger (9), Planetenräder (7) und mindestens ein Sonnenrad (8) für die Übertragung eines Drehmomentes zwischen dem Antreiber (3) und der Nabenhülse (5) über unterschiedliche Übertragungspfade;
- eine Steuereinrichtung zur Auswahl zwischen den unterschiedlichen Übertragungspfaden zum Wechseln der Gangstufen im Getriebe mit mindestens zwei steuerbaren Freilaufkupplungen mit Klinken (10,11), wobei eine dieser Freilaufkupplungen im Momentenpfad zwischen dem Hohlrad (6) und der Nabenhülse (5) angeordnet ist und wobei die Steuereinrichtung von einer Fernbedienung betätigbar ist und aus einer Schalthülse (21, 21a) und einer Schaltbuchse (20, 20a) besteht,
**dadurch gekennzeichnet,**
**dass** die Schaltbuchse (20, 20a) an der Seite, die der Klinke (10) zugewandt ist, an ihrem Umfang in Drehrichtung Schalthülse Schaltvorsprünge (23) und Lücken (30) aufweist und dass die Schalthülse (21, 21a) an der Seite, die der Klinke (11) zugewandt ist, an ihrem Umfang in Drehrichtung Schaltvorsprünge (24) und
Lücken (30) aufweist, die beim Schalten der Gangstufen die zugeordneten Klinken (10,11) auch unter Last außer Eingriff an der zugehörigen Verzahnung (18,19) bringen können.

2. Schalteinrichtung nach Anspruch 1,
**dadurch gekennzeichnet,**
**dass** die Schalthülse (21) und die Schaltbuchse (20) axial zueinander fest und drehbar miteinander verbunden sind.

3. Schalteinrichtung nach Anspruch 1,
**dadurch gekennzeichnet,**
**dass** die Schalthülse (21a) und die Schaltbuchse (20) axial zueinander verschiebbar und drehbar miteinander verbunden sind.

4. Schalteinrichtung nach Anspruch 3,
**dadurch gekennzeichnet,**
**dass** die Schaltbuchse (20) durch eine Speicherfeder (40) an einer bevorzugten Position auf der Schalthülse (21a) gehalten wird.

5. Schalteinrichtung nach Anspruch 3 oder 4,
**dadurch gekennzeichnet,**
**dass** die Schaltbuchse (20) gegenüber der geschalteten Schalthülse (21a) um den Weg mindestens einer Gangstufe vorübergehend zurückbleiben kann.

6. Schalteinrichtung nach einem der Ansprüche 1 bis 5,
**dadurch gekennzeichnet,**
**dass** die Schalteinheit (22,22a) zum Wechsel der Gangstufen von einer Fernbedienung axial verschoben werden kann.

7. Schalteinrichtung nach einem der Ansprüche 1 bis 6,
**dadurch gekennzeichnet,**
**dass** die Schalthülse (21,21a) direkt oder indirekt mit der Nabenachse (1) längsverschieblich aber drehfest verbunden ist.

8. Schalteinrichtung nach Anspruch 7,
**dadurch gekennzeichnet,**
**dass** die Schalthülse (21,21a) mit der Steuereinrichtung über ein Schaltteil, insbesondere einen Schubklotz (13), in Wirkverbindung steht.

9. Schalteinrichtung nach Anspruch 1 oder 7,
**dadurch gekennzeichnet,**
**dass** die Schalthülse (21,21a) mit der Steuereinrichtung über ein Schiebeelement in Wirkverbindung steht.

10. Schalteinrichtung nach Anspruch 1 oder 9,
**dadurch gekennzeichnet,**
**dass** das Schiebeelement in/an der Nabenachse (1) geführt ist.

11. Schalteinrichtung nach Anspruch 1,
**dadurch gekennzeichnet,**
**dass** die Klinken (10) und (11) um je eine Lagerstelle (16) und (17) schwenkbar gelagert sind und je einen Steuerbereich (34) aufweisen, der zum Zweck der Aushebung der Klinken (10,11) mit den Profilen der Schalteinheit (22) zusammenwirkt.

12. Schalteinrichtung nach Anspruch 1 oder 11,
**dadurch gekennzeichnet,**
**dass** der Steuerbereich (34) auf der zu der Schalteinheit (22,22a) hingewandten Seite eine Schräge (26) aufweist, die mit den Profilen der Schalteinheit (22,22a) zusammenwirkt.

13. Schalteinrichtung nach Anspruch 1,
**dadurch gekennzeichnet,**
**dass** die Stirnflächen der Vorsprünge (23,24) und/oder die Stirnflächen der Lücken (30) je eine kegelförmige Abschrägung (42) aufweisen, die mit der Schräge (26) der Klinken (10,11), insbesondere bei Stillstand des Planetengetriebes, zusammenwirken.

14. Schalteinrichtung nach einem der Ansprüche 1 bis 13,
**dadurch gekennzeichnet,**
**dass** die Lücken (30) zwischen den Schaltvorsprüngen (23) und/oder (24) jeweils eine Breite (29) aufweisen, die groß genug ist, um die Schaltbuchse (20) und/oder die Schalthülse (21,21 a) im Fahrbetrieb so weit gegen Klinke (10) und/oder (11) zu schieben, dass die in der Lücke (30) befindliche Stirnfläche mit der Klinke (10) und/oder (11) zusammenwirken kann.

15. Schalteinrichtung nach einem der Ansprüche 1 bis 14,
**dadurch gekennzeichnet,**
**dass** die Schaltvorsprünge (23,24) an den mit den Schrägen (26) der Klinken (10.11) zusammenwirkenden Kanten für den Fall, dass eine Begrenzung des Anhebedrehmoments unter Last erforderlich ist, ebenfalls Anschrägungen (36) aufweisen.

16. Schalteinrichtung nach Anspruch 4,
**dadurch gekennzeichnet,**
**dass** die Schaltbuchse (20) und/oder die Schalthülse (21) bei Übersteigen einer Grenze für ein bestimmtes noch tolerierbares Aushebedrehmoment gegen hierfür mit bestimmten Grenzwerten ausgelegte Speicherfedern von den Klinken (10,11) abgewiesen und gegen die Schaltrichtung unter Vorspannung der Speicherfedern verschoben werden.

17. Schalteinrichtung nach einem der Ansprüche 1 bis 16,
**dadurch gekennzeichnet,**
**dass** die Schalteinheit (22,22a) an ihren Außendurchmessern je eine Zylinderfläche (37,38) aufweist, die sich beim Schaltvorgang nach dem Ausheben der Klinke (11) unter den Steuerbereich (34) der Klinke (10,11) schiebt und diese außer Eingriff hält.

18. Schalteinrichtung nach einem der Ansprüche 1 bis 17,
**dadurch gekennzeichnet,**
**dass** die Schalteinheit (22,22a) beispielsweise eine Schaltbuchse (20a,20b) zur Begrenzung des Aushebedrehmomentes unter Last eine Friktionskupplung (39) aufweisen kann.

19. Schalteinrichtung nach einem vorhergehenden Ansprüche,
**dadurch gekennzeichnet,**
**dass** die Klinken (10) und (11) untereinander gleich sind.

20. Schalteinrichtung nach einem der Ansprüche 1 bis 19,
**dadurch gekennzeichnet,**
**dass** die Klinken (10,11) je eine Treibkante (33) aufweisen, die mit Verzahnungen (18,19) zusammenwirken, wobei die Treibkante (33) mit der Vorspannkraft einer Feder (25) gegen die Verzahnungen (18,19) gepreßt wird.

21. Schalteinrichtung nach einem der Ansprüche 1 bis 20,
**dadurch gekennzeichnet,**
**dass** die Schaltbuchse (20) in einem Kupplungsring (12), der drehfest mit dem Antreiber (3) verbunden ist, drehfest aber axial verschiebbar gelagert ist.

22. Schalteinrichtung nach Anspruch 21,
**dadurch gekennzeichnet,**
**dass** die Schaltbuchse (20) mit der Drehgeschwindigkeit des Antreibers (3) umläuft, wobei die Mitnahme über Stege (28) erfolgt, die in einem Schlitz (27) des Kupplungsrings (12) geführt sind, wobei die Schaltbuchse (20) den Kupplungsring (12) durchragt.

23. Schalteinrichtung nach einem der Ansprüche 1 bis 21,
**dadurch gekennzeichnet,**
**dass** die erste Klinke (10) im Fahrbetrieb vor dem Wechsel der Gangstufen im Getriebe schneller umläuft, als die Schaltbüchse (20), und dass die zweite Klinke (11) ebenfalls schneller umläuft, als die Schalthülse (21,21a).

## Claims

1. Shifting device for a multi-speed hub for a bicycle, comprising
- a hub axle (1);
- a driver (3);
- a hub sleeve (5);
- a transmission, in particular at least one epicyclic transmission, each comprising the traditional elements, namely at least one annulus (6), at least one planet carrier (9), planet wheels (7) and at least one sun wheel (8) for the transmission of a torque between the driver (3) and the hub sleeve (5) via different transmission paths;
- a control device for choosing between the different transmission paths for changing the gear ratios in the transmission with at least two controllable freewheel clutches with catches (10, 11), with one of these freewheel clutches being arranged in the instantaneous path between the annulus (6) and the hub sleeve (5), and with the control device being operable by a remote control and comprising a shift sleeve (21, 21a) and a shift bush (20, 20a),
**characterized**
**in that** the shift bush (20, 20a) has shift projections (23) and gaps (30) on its circumference in the direction of rotation on the side facing the catch (10) and in that, on the side facing the catch (11), the shift sleeve (21, 21a) has shift projections (24) and gaps (30) on its circumference in the direction of rotation, which can disengage the associated catches (10, 11) from the associated tooth system (18, 19), even under load, when the gear ratios are changed.

2. Shifting device according to Claim 1, **characterized in that** the shift sleeve (21) and the shift bush (20) are connected to one another in such a way as to be fixed axially relative to one another and rotatable.

3. Shifting device according to Claim 1, **characterized in that** the shift sleeve (21a) and the shift bush (20) are connected to one another in such a way that they can be displaced axially relative to one another and are rotatable.

4. Shifting device according to Claim 3, **characterized in that** the shift bush (20) is held at a preferred position on the shift sleeve (21a) by a storage spring (40).

5. Shifting device according to Claim 3 or 4, **characterized in that** the shift bush (20) can lag temporarily behind the shifted shift sleeve (21a) by the travel corresponding to at least one gear ratio.

6. Shifting device according to one of Claims 1 to 5, **characterized in that** the shift unit (22, 22a) can be displaced axially by a remote control to change gear ratios.

7. Shifting device according to one of Claims 1 to 6, **characterized in that** the shift sleeve (21, 21a) is connected directly or indirectly in a longitudinally displaceable but rotationally rigid manner to the hub axle (1).

8. Shifting device according to Claim 7, **characterized in that** the shift sleeve (21, 21a) is operatively connected to the control device by a shift component, in particular a thrust block (13).

9. Shifting device according to Claim 1 or 7, **characterized in that** the shift sleeve (21, 21a) is operatively connected to the control device by a sliding element.

10. Shifting device according to Claim 1 or 9, **characterized in that** the sliding element is guided in/on the hub axle (1).

11. Shifting device according to Claim 1, **characterized in that** the pawls (10) and (11) are mounted so as to be pivotable about respective bearing locations (16) and (17) and each have a control region (34) which interacts with the profiles of the shift unit (22) for the purpose of lifting out the pawls (10, 11).

12. Shifting device according to Claim 1 or 11, **characterized in that**, on the side facing the shift unit (22, 22a), the control region (34) has a bevel (26) which interacts with the profiles of the shift unit (22, 22a).

13. Shifting device according to Claim 1, **characterized in that** the end faces of the projections (23, 24) and/or the end faces of the gaps (30) each have a conical chamfer (42) which interacts with the bevel (26) of the pawls (10, 11), in particular when the epicyclic transmission is stationary.

14. Shifting device according to one of Claims 1 to 13, **characterized in that** the gaps (30) between the shift projections (23) and/or (24) each have a width (29) sufficient to allow the shift bush (20) and/or the shift sleeve (21, 21a) to be pushed against pawl (10) and/or (11) during riding until the end face situated in the gap (30) can interact with the pawl (10) and/or (11).

15. Shifting device according to one of Claims 1 to 14, **characterized in that** the shift projections (23, 24) on the edges which interact with the bevels (26) of the pawls (10, 11) likewise have chamfers (36) in case it is necessary to limit the lifting torque under load.

16. Shifting device according to Claim 4, **characterized in that** the shift bush (20) and/or the shift sleeve (21) is/are repelled by the pawls (10, 11), if a limit for a certain still-tolerable lift-out torque against storage springs designed with certain limiting values for this purpose is exceeded, and is/are displaced counter to the shifting direction, with the storage springs being prestressed.

17. Shifting device according to one of Claims 1 to 16, **characterized in that**, on its outside diameters, the shift unit (22, 22a) has in each case a cylindrical surface (37, 38) which slides under the control region (34) of the pawl (10, 11) during the shift operation, after the lifting out of the pawl (11), and holds the latter out of engagement.

18. Shifting device according to one of Claims 1 to 17, **characterized in that** the shift unit (22, 22a), for example a shift bush (20a, 20b), can have a friction clutch (39) to limit the lift-out torque under load.

19. Shifting device according to one of the preceding claims, **characterized in that** the pawls (10) and (11) are the same as one another.

20. Shifting device according to one of Claims 1' to 19, **characterized in that** the pawls (10, 11) each have a driving edge (33), these driving edges interacting with toothings (18, 19), the driving edge (33) being pressed against the toothings (18, 19) by the prestressing force of a spring (25).

21. Shifting device according to one of Claims 1 to 20, **characterized in that** the shift bush (20) is mounted in a rotationally rigid but axially displaceable manner in a coupling ring (12), which is connected in a rotationally rigid manner to the driver (3).

22. Shifting device according to Claim 21,
**characterized in that** the shift bush (20) revolves at the rotational speed of the driver (3), driving being effected by means of webs (28) guided in a slot (27) in the coupling ring (12), the shift bush (20) projecting through the coupling ring (12).

23. Shifting device according to one of Claims 1 to 21, **characterized in that**, during riding, the first pawl (10) revolves more quickly in the transmission before the changing of the gear ratios than the shift bush (20), and **characterized in that** the second pawl (11) likewise revolves more quickly than the shift sleeve (21, 21a).

## Revendications

1. Dispositif d'enclenchement pour moyeu de bicyclette à plusieurs vitesses, comprenant :
- un axe de moyeu (1) ;
- un entraîneur (3) ;
- une bague de moyeu (5) ;
- un engrenage, en particulier au moins un engrenage planétaire, chacun comprenant les éléments conventionnels, notamment au moins une roue à denture intérieure (6), au moins un porte-satellites (9), des pignons satellites (7) et au moins une roue solaire (8) pour la transmission d'un couple de rotation entre l'entraîneur (3) et la bague de moyeu (5) par l'intermédiaire de différents chemins de transmission ;
- un dispositif de commande permettant de choisir parmi les différents chemins de transmission pour changer les rapports dans l'engrenage avec au moins deux couplages à roue libre réglables avec des cliquets (10, 11), dans lequel l'un de ces couplages à roue libre est disposé sur le chemin des moments entre la roue à denture intérieure (6) et la bague de moyeu (5), et dans lequel le dispositif de commande peut être actionné par une télécommande et se compose d'une bague d'enclenchement (21, 21a) et d'une douille d'enclenchement (20, 20a),
**caractérisé en ce que**
la douille d'enclenchement (20, 20a) présente du côté tourné vers le cliquet (10) sur sa circonférence dans la direction de rotation des saillies d'enclenchement (23) et des intervalles (30), et **en ce que** la bague d'enclenchement (21, 21a) présente du côté tourné vers le cliquet (11) sur sa circonférence dans la direction de rotation des saillies d'enclenchement (24) et des intervalles (30) qui permettent de débrayer les cliquets attribués (10, 11) sur la denture associée (18, 19) même en charge lorsque les rapports sont enclenchés.

2. Dispositif d'enclenchement selon la revendication 1, **caractérisé en ce que** la bague d'enclenchement (21) et la douille d'enclenchement (20) sont reliées ensemble axialement de façon solidaire l'une avec l'autre et de façon à pouvoir tourner l'une avec l'autre.

3. Dispositif d'enclenchement selon la revendication 1, **caractérisé en ce que** la bague d'enclenchement (21a) et la douille d'enclenchement (20) sont reliées ensemble axialement de façon mobile l'une par rapport à l'autre et de façon à pouvoir tourner l'une avec l'autre.

4. Dispositif d'enclenchement selon la revendication 3, **caractérisé en ce que** la douille d'enclenchement (20) est maintenue par un ressort accumulateur (40) dans une position préférée sur la bague d'enclenchement (21a).

5. Dispositif d'enclenchement selon la revendication 3 ou 4, **caractérisé en ce que** la douille d'enclenchement (20) peut provisoirement rester en arrière de la distance d'au moins un rapport par rapport à la bague d'enclenchement (21a) enclenchée.

6. Dispositif d'enclenchement selon l'une quelconque des revendications 1 à 5, **caractérisé en ce que** l'unité d'enclenchement (22, 22a) permettant de changer de rapport peut être déplacée axialement par une télécommande.

7. Dispositif d'enclenchement selon l'une quelconque des revendications 1 à 6, **caractérisé en ce que** la bague d'enclenchement (21, 21a) est reliée directement ou indirectement à l'axe de moyeu (1) de façon mobile dans le sens de la longueur mais de façon solidaire en rotation.

8. Dispositif d'enclenchement selon la revendication 7, **caractérisé en ce que** la bague d'enclenchement (21, 21a) coopère avec le dispositif de commande par l'intermédiaire d'une pièce d'enclenchement, en particulier un patin (13).

9. Dispositif d'enclenchement selon la revendication 1 ou 7, **caractérisé en ce que** la bague d'enclenchement (21, 21a) est en coopère avec le dispositif de commande par l'intermédiaire d'un élément coulissant.

10. Dispositif d'enclenchement selon la revendication 1 ou 9, **caractérisé en ce qu'**un élément coulissant est guidé dans/ sur l'axe de moyeu (1).

11. Dispositif d'enclenchement selon la revendication 1, **caractérisé en ce que** les cliquets (10) et (11) sont logés de façon à pouvoir pivoter, respectivement autour d'un point d'appui (16) et (17) et présentent respectivement une zone de commande (34) qui coopère avec les profils de l'unité d'enclenchement (22) dans le but de faire sortir les cliquets (10, 11).

12. Dispositif d'enclenchement selon la revendication 1 ou 11, **caractérisé en ce que** la zone de commande (34) présente une inclinaison (26) du côté tourné vers l'unité d'enclenchement (22, 22a), ladite inclinaison coopérant avec les profils de l'unité d'enclenchement (22, 22a).

13. Dispositif d'enclenchement selon la revendication 1, **caractérisé en ce que** les faces des saillies (23, 24) et/ou les faces des intervalles (30) présentent respectivement un chanfrein conique (42) qui coopère avec l'inclinaison (26) des cliquets (10, 11), en particulier en cas d'arrêt de l'engrenage planétaire.

14. Dispositif d'enclenchement selon l'une quelconque des revendications 1 à 13, **caractérisé en ce que** les intervalles (30) entre les saillies d'enclenchement (23) et/ou (24) présentent respectivement une largeur (29) qui est suffisamment grande pour pousser la douille d'enclenchement (20) et/ou la bague d'enclenchement (21, 21a) en cours de conduite contre le cliquet (10) et/ou (11) à tel point que la face frontale qui se trouve dans l'intervalle (30) peut coopérer avec le cliquet (10) et/ou (11).

15. Dispositif d'enclenchement selon l'une quelconque des revendications 1 à 14, **caractérisé en ce que** les saillies d'enclenchement (23, 24) présentent également des chanfreins (36) sur les bords coopérant avec les inclinaisons (26) des cliquets (10, 11) au cas où une limitation du couple de levée en charge serait nécessaire.

16. Dispositif d'enclenchement selon la revendication 4, **caractérisé en ce que** la douille d'enclenchement (20) et/ou la bague d'enclenchement (21), en cas de dépassement d'une limite pour un certain couple de levée encore tolérable par rapport à des ressorts accumulateurs dimensionnés avec certaines valeurs limites à cet effet, est rejetée par les cliquets (10, 11) et déplacée contre le sens d'enclenchement en précontraignant les ressorts accumulateurs.

17. Dispositif d'enclenchement selon l'une quelconque des revendications 1 à 16, **caractérisé en ce que** l'unité d'enclenchement (22, 22a) présente sur ses diamètres extérieurs respectivement une surface cylindrique (37, 38) qui s'insère lors de l'opération d'enclenchement après la sortie du cliquet (11) sous la zone de commande (34) du cliquet (10, 11) et maintient celui-ci en position débrayée.

18. Dispositif d'enclenchement selon l'une quelconque des revendications 1 à 17, **caractérisé en ce que** l'unité d'enclenchement (22, 22a), par exemple une douille d'enclenchement (20a, 20b), peut présenter un couplage à friction (39) pour limiter le couple de sortie en charge.

19. Dispositif d'enclenchement selon l'une quelconque des revendications précédentes, **caractérisé en ce que** les cliquets (10) et (11) sont identiques l'un à l'autre.

20. Dispositif d'enclenchement selon l'une quelconque des revendications 1 à 19, **caractérisé en ce que** les cliquets (10, 11) présentent respectivement un bord d'entraînement (33) qui coopère avec les dentures (18, 19), le bord d'entraînement (33) étant pressé contre les dentures (18, 19) avec la force de précontrainte d'un ressort (25).

21. Dispositif d'enclenchement selon l'une quelconque des revendications 1 à 20, **caractérisé en ce que** la douille d'enclenchement (20) est logée de façon solidaire en rotation mais axialement mobile dans un anneau de couplage (12) qui est relié à l'entraîneur (3) de façon solidaire en rotation.

22. Dispositif d'enclenchement selon la revendication 21, **caractérisé en ce que** la douille d'enclenchement (20) tourne à la vitesse de rotation de l'entraîneur (3), l'entraînement s'effectuant par l'intermédiaire d'entretoises (28) qui sont guidées dans une fente (27) de l'anneau de couplage (12), la douille d'enclenchement (20) faisant saillie à travers l'anneau de couplage (12).

23. Dispositif d'enclenchement selon l'une quelconque des revendications 1 à 21, **caractérisé en ce qu'**en cours de conduite, le premier cliquet (10) tourne plus vite avant le changement des rapports dans l'engrenage que la douille d'enclenchement (20), et **en ce que** le deuxième cliquet (11) tourne également plus vite que la bague d'enclenchement (21, 21a).
